# EUROPÄISCHE PATENTSCHRIFT

(11) **EP 3 517 901 B1**
(45) Veröffentlichungstag und Bekanntmachung des Hinweises auf die Patenterteilung: **01.03.2023**
(21) Anmeldenummer: 18212935.3
(22) Anmeldetag: 17.12.2018
(51) Int. Cl.: G01F 1/58, G01F 25/10

(54) **MAGNETISCH-INDUKTIVES DURCHFLUSSMESSGERÄT**
MAGNETIC-INDUCTIVE FLOW METER
DÉBITMÈTRE À INDUCTION MAGNÉTIQUE

(30) Priorität: 24.01.2018 DE 102018101568
(43) Veröffentlichungstag der Anmeldung: 31.07.2019
(73) Patentinhaber: Krohne AG, 4019 Basel (CH)
(72) Erfinder: Neven, Joseph, 26100 Romans (FR); Brockhaus, Helmut, 46145 Oberhausen (DE)
(74) Vertreter: Gesthuysen Patentanwälte

(56) Entgegenhaltungen:
- EP-A1- 2 169 359
- DE-A1- 1 951 378
- DE-A1-102004 057 680
- DE-A1-102010 003 642
- DE-A1-102010 031 433
- GB-A- 2 312 515
- US-A- 3 002 379

## Beschreibung

Die Erfindung betrifft ein magnetisch-induktives Durchflussmessgerät zur Bestimmung des Durchflusses wenigstens eines Mediums, mit einem ersten Messrohr und mit einem zweiten Messrohr zum Führen des wenigstens einen Mediums, wobei die Messrohre parallel zueinander verlaufen, mit einer Magnetfelderzeugungseinrichtung zum Erzeugen eines die Messrohre senkrecht zur Strömungsrichtung des wenigstens einen Mediums durchsetzenden Magnetfeldes, mit einem ersten Elektrodenpaar zum Abgreifen einer in dem Medium im ersten Messrohr induzierten ersten Messspannung, mit einem zweiten Elektrodenpaar zum Abgreifen einer in dem Medium im zweiten Messrohr induzierten zweiten Messspannung und mit einer Auswerteeinrichtung zur Auswertung der Messspannungen, wobei das erste Elektrodenpaar und das zweite Elektrodenpaar zusammen durch eine erste Elektrode, eine zweite Elektrode und eine dritte Elektrode gebildet sind, wobei die zweite Elektrode sowohl Teil des ersten Elektrodenpaares als auch Teil des zweiten Elektrodenpaares ist und wobei die zweite Elektrode zwischen den beiden Messrohren angeordnet ist, wobei die drei Elektroden entlang einer Achse senkrecht zur Strömungsrichtung des Mediums und senkrecht zur Magnetfeldrichtung angeordnet sind.

Die in Rede stehenden magnetisch-induktiven Durchflussmessgeräte sind aus dem Stand der Technik bekannt und finden zum Beispiel im Bereich der Medizintechnik, insbesondere der Dialyse, Anwendung. Bei magnetisch-induktiven Messgeräten wird das Prinzip der Ladungstrennung in einem strömenden - leitfähigen - Medium genutzt, was voraussetzt, dass die Strömungsrichtung des Mediums und die Orientierung des das Medium durchsetzenden Magnetfeldes nicht gleich orientiert sind. Eine senkrechte Ausrichtung von Messrohren und Magnetfeld ist zwar wünschenswert aber nicht zwingend erforderlich. Wenn es heißt, dass die Magnetfelderzeugungseinrichtung zum Erzeugen eines die Messrohre senkrecht zur Strömungsrichtung des wenigstens einen Mediums durchsetzenden Magnetfeldes dient, dann ist damit bei verständiger Würdigung also "im Wesentlichen senkrecht" gemeint. Die Ladungstrennung führt letztlich zu induzierten Spannungen, den Messspannungen, die über die Elektrodenpaare abgegriffen werden.

Bei den gattungsgemäßen Durchflussmessgeräten wird ein Schwerpunkt auf den Vergleich der Durchflussmengen in dem ersten Messrohr und dem zweiten Messrohr gelegt, bzw. auf die Bestimmung des Differenzflusses zwischen den Durchflussmengen im ersten Messrohr und zweiten Messrohr. Durch die Bestimmung des Differenzflusses wird ermöglicht, zu überwachen, ob beispielsweise die in einen Körper einströmenden Volumenströme den aus dem Körper ausströmenden Volumenströmen entsprechen. Ebenfalls können gewollte Differenzflüsse gezielt überwacht werden.

Ein gattungsgemäßes magnetisch-induktives Durchflussmessgerät ist beispielsweise aus der EP2 169 359 A1 bekannt. Auch die Druckschriften DE 1 951 378 und GB 2 312 515 A offenbaren gattungsgemäße magnetisch-induktive Durchflussmessgeräte. Aus der DE 10 2010 003 642 A1 ist eine auf dem magnetisch-induktiven Messprinzip basierende Vorrichtung zur Bilanzieren von Flüssigkeitsströmen in einem Dialysesystem bekannt.

Nachteilig im Stand der Technik ist, dass eine fehlerhafte Funktionsweise der Durchflussmessgeräte nicht auf einfache Art und Weise erkannt werden kann. Insbesondere im medizinischen Bereich ist es notwendig, dass die magnetisch-induktiven Durchflussmessgeräte neben einer hohen Messgenauigkeit eine geringe Ausfallrate aufweisen und Messfehler oder Gerätefehler schnellstmöglich erkannt werden können, um Schaden am Patienten zu vermeiden.

Der Erfindung liegt demnach die Aufgabe zugrunde, ein magnetisch-induktives Durchflussmessgerät anzugeben, das eine erhöhte Zuverlässigkeit bezüglich seiner Funktionsweise und der ermittelten Durchfluss- und Differenzflusswerte aufweist. Ebenfalls liegt der Erfindung die Aufgabe zugrunde, ein Verfahren zum Betreiben eines solchen magnetisch-induktiven Durchflussmessgerätes anzugeben.

Die Aufgabe ist zunächst und im Wesentlichen dadurch gelöst, nämlich mit den Merkmalen des Kennzeichnungsteils des Patentanspruchs 1, dass die Magnetfelderzeugungseinrichtung eine Spulenanordnung und eine Ansteuereinheit zum Beaufschlagen der Spulenanordnung mit einem Spulenstrom aufweist, dass die Spulenanordnung durch eine einzelne Spule realisiert ist, oder dass die Spulenanordnung durch mehrere in Reihe geschaltete Spulen realisiert ist, wobei die mehreren Spulen in Reihe geschaltet sind, um zu gewährleisten, dass alle Spulen mit dem gleichen Spulenstrom beaufschlagt sind, dass zwischen der Ansteuereinheit und einem ersten Anschluss der Spulenanordnung eine erste Spulenstrommessvorrichtung zur Erfassung eines ersten Spulenstroms angeordnet ist und zwischen einem zweiten Anschluss der Spulenanordnung und der Ansteuereinheit eine zweite Spulenstrommessvorrichtung zur Erfassung eines zweiten Spulenstroms angeordnet ist und dass die Auswerteeinrichtung derart ausgestaltet ist, dass sie den ersten Spulenstrom und den zweiten Spulenstrom miteinander vergleicht.

Wenn es einleitend heißt, dass die drei Elektroden insgesamt entlang einer Achse angeordnet sind, dann ist damit nicht zwingend gemeint, dass alle Elektroden auf der Achse liegen. Vielmehr kann auch eine der Elektroden, oder zwei der Elektroden, auf der Achse liegen und die anderen beiden Elektroden, oder die andere Elektrode, beabstandet von der Achse angeordnet sein. Es kommt jedoch darauf an, dass die Elektroden insgesamt entlang einer Richtung angeordnet sind. In einer bevorzugten Ausgestaltung liegen die drei Elektroden auf einer Achse. Durch die Anordnung der Elektroden entlang einer Achse ergibt sich, dass das erste Messrohr und das zweite Messrohr nicht von den selben Magnetfeldlinien durchsetzt werden.

Das Medium, das im ersten Messrohr strömt, kann das gleiche sein, wie das Medium, das im zweiten Messrohr strömt. Bei den Medien kann es sich aber auch um gänzlich verschiedene Medien handeln, oder das Medium in einem Messrohr kann dem Medium im zweiten Messrohr entsprechen, wobei eins der Medien Zusatzstoffe führt. Für die Erfindung ist nicht wesentlich, ob es sich um das gleiche oder um verschiedene Medien handelt.

Durch die erfindungsgemäße Ausgestaltung des magnetisch-induktiven Durchflussmessgerätes ergibt sich, dass die Summe der Spannung, die zwischen der ersten und der zweiten Elektrode abgegriffen wird und der Spannung, die zwischen der zweiten und der dritten Elektrode abgegriffen wird, der Spannung, die zwischen der ersten und der dritten Elektrode abgegriffen wird, entspricht.

Das magnetisch-induktive Durchflussmessgerät kann derart betrieben werden, dass die Strömungsrichtung des Mediums im ersten Messrohr entgegengesetzt der Strömungsrichtung des Mediums im zweiten Messrohr ist. Die Summe der abgegriffenen Spannungen ist dann effektiv eine Differenz und entspricht der Differenzspannung. Es ist bekannt, dass zwischen der gemessenen Spannung und dem Durchfluss ein linearer Zusammenhang besteht, wobei die Steigung einem Gain-Wert entspricht und der Achsenabschnitt einem Offset-Wert entspricht. Bei absolut identischer Ausgestaltung der beiden Messrohre und gleichen Werten für Offset und Gain kann aus der Differenzspannung der Differenzfluss zwischen erstem und zweitem Medium bestimmt werden. Daraus ergibt sich die Möglichkeit, nicht nur drei Spannungswerte auf Übereinstimmung zu überprüfen, sondern ebenfalls die sich daraus ergebenden Durchflusswerte auf Übereinstimmung zu überprüfen.

Das magnetisch-induktive Durchflussmessgerät kann auch derart betrieben werden, dass die Strömungsrichtung des Mediums im ersten Messrohr der Strömungsrichtung des Mediums im zweiten Messrohr entspricht.

Bevorzugt realisiert die zweite Elektrode eine elektrisch leitende Verbindung zwischen dem Medium im ersten Messrohr und dem Medium im zweiten Messrohr.

In einer besonders bevorzugten Ausgestaltung des erfindungsgemäßen magnetisch-induktiven Durchflussmessgerätes ist die zweite Elektrode aus einer ersten Teilelektrode und einer zweiten Teilelektrode gebildet. Die beiden Teilelektroden sind elektrisch leitend miteinander verbunden. Bei dieser Ausgestaltung wird das erste Elektrodenpaar demnach durch die erste Elektrode und die erste Teilelektrode der zweiten Elektrode gebildet und wird das zweite Elektrodenpaar durch die zweite Teilelektrode der zweiten Elektrode und die dritte Elektrode gebildet. Dadurch, dass die beiden Teilelektroden der zweiten Elektrode elektrisch leitend miteinander verbunden sind, liegen sie auf dem gleichen Potenzial, sodass auch bei dieser Ausgestaltung des magnetisch-induktiven Durchflussmessgerätes gilt, dass die Summe der Spannung, die zwischen der ersten Elektrode und der ersten Teilelektrode der zweiten Elektrode abgegriffen wird und der Spannung, die zwischen der zweiten Teilelektrode der zweiten Elektrode und der dritten Elektrode abgegriffen wird, der Spannung, die zwischen der ersten und der dritten Elektrode abgegriffen wird, entspricht.

Das erste Messrohr und das zweite Messrohr können ihrer Geometrie nach identisch ausgebildet sein.

In einer bevorzugten Ausgestaltung des erfindungsgemäßen magnetisch-induktiven Durchflussmessgerätes ist vorgesehen, dass das erste Messrohr und das zweite Messrohr stoffschlüssig miteinander verbunden sind.

In einer alternativen Ausgestaltung sind das erste Messrohr und das zweite Messrohr einstückig ausgebildet. Wenn hier die Rede von einstückig ist, dann bedeutet das, dass die beiden Messrohre zusammen als ein Teil hergestellt sind und nicht beide Messrohre erst separat hergestellt und nachträglich zusammengefügt sind.

In einer Ausgestaltung weisen die Messrohre einen rechteckigen Querschnitt und damit vier Wände auf. In einer Ausgestaltung, in der die Messrohre einstückig ausgebildet sind, ist, weisen die beiden Messrohre eine gemeinsame Wand auf, ist also eine Wand sowohl Teil des ersten Messrohres als auch Teil des zweiten Messrohres. Die zweite Elektrode ist dann in dieser gemeinsamen Wand angeordnet.

In einer bevorzugten Ausgestaltung sind die Messrohre durch Extrusion gefertigt.

Funktionsnotwendig weisen magnetisch-induktive Durchflussmessgeräte Magnetfelderzeugungseinrichtungen zur Erzeugung eines das Messrohr bzw. die Messrohre durchsetzenden Magnetfeldes auf. Bei dem erfindungsgemä-βen magnetisch-induktiven Durchflussmessgerät weist die Magnetfelderzeugungseinrichtung eine Spulenanordnung und eine Ansteuereinheit zum Beaufschlagen der Spulenanordnung mit einem Spulenstrom auf. Die Spulenanordnung weist hierfür einen ersten Anschluss und einen zweiten Anschluss auf. Zwischen der Ansteuereinheit und dem ersten Anschluss der Spulenanordnung ist eine erste Spulenstrommessvorrichtung zur Erfassung eines ersten Spulenstroms angeordnet und zwischen dem zweiten Anschluss der Spulenanordnung und der Ansteuereinheit ist eine zweite Spulenstrommessvorrichtung zur Erfassung eines zweiten Spulenstroms angeordnet. Neben der Magnetfelderzeugungseinrichtung weist das magnetisch-induktive Durchflussmessgerät eine Auswerteeinrichtung auf. Bei dem erfindungsgemäßen Durchflussmessgerät ist die Auswerteeinrichtung derart ausgebildet, dass sie den ersten Spulenstrom und den zweiten Spulenstrom miteinander vergleicht. Im ungestörten Fall sind die beiden Spulenströme identisch. Weichen die beiden Spulenströme voneinander ab, so liegt ein Fehlerzustand in der Spulenanordnung vor. In einer Ausgestaltung gibt die Auswerteeinrichtung beim Abweichen der Spulenströme voneinander eine Fehlermeldung aus.

Die Spulenanordnung ist durch eine einzelne Spule oder durch mehrere in Reihe geschaltete Spulen realisiert.

Eine besonders bevorzugte Ausgestaltung des erfindungsgemäßen magnetisch-induktiven Durchflussmessgerätes ist dadurch ausgezeichnet, dass die Auswerteeinrichtung eine erste Auswerteeinheit und eine zweite Auswerteeinheit aufweist. Die Auswerteeinrichtung ist derart ausgestaltet, dass die erste Auswerteeinheit und die zweite Auswerteeinheit jeweils unabhängig voneinander aus den Messspannungen abgeleitete Messwerte für den Durchfluss des Mediums im ersten Messrohr und den Durchfluss des Mediums im zweiten Messrohr bestimmen. Zusätzlich oder alternativ kann ein Wert für den Differenzfluss im ersten Messrohr und im zweiten Messrohr bestimmt werden. Die zweite Auswerteeinheit gleicht dann die Durchflussmesswerte der ersten Auswerteeinheit mit ihren Durchflussmesswerten ab.

Der zuvor ausgeführte Spulenstromabgleich kann von der ersten Auswerteeinheit oder von der zweiten Auswerteeinheit oder von beiden Auswerteeinheiten durchgeführt werden.

Die beiden Auswerteeinheiten erhalten in einer Ausgestaltung die gleichen Eingangswerte als Grundlage für ihre Berechnung. In einer Ausgestaltung werden die erhaltenen Eingangswerte miteinander abgeglichen. Weichen die erhaltenen Eingangswerte voneinander ab, so liegt ein Fehler in der Übermittlung der Eingangswerte an eine der beiden oder an beide Auswerteeinheiten vor. Stimmen die Eingangswerte überein und weichen dann die Durchflussmesswerte der beiden Auswerteeinheiten voneinander ab, so liegt der Fehler in einer der beiden Auswerteeinheiten.

In einer anderen Ausgestaltung erhält die erste Auswerteeinheit den ersten Spulenstrommesswert von der ersten Spulenstrommessvorrichtung und die zweite Auswerteeinheit den zweiten Spulenstrommesswert von der zweiten Spulenstrommessvorrichtung. Weichen dann die Spulenstrommesswerte der beiden Auswerteeinheiten voneinander ab, so kann der Fehler auch in einem Fehler der Spulenstromanordnung begründet sein.

Eine weitere besonders bevorzugte Ausgestaltung des erfindungsgemäßen magnetisch-induktiven Durchflussmessgerätes ist dadurch gekennzeichnet, dass die Auswerteeinrichtung derart ausgebildet ist, dass sie die Summe der Messspannung zwischen der ersten Elektrode und der zweiten Elektrode und der Messspannung zwischen der zweiten Elektrode und der dritten Elektrode bildet und den Summenwert mit dem Wert der Messspannung zwischen der ersten und der dritten Elektrode vergleicht. Weist die Auswerteeinrichtung wie oben beschrieben zwei Auswerteeinheiten auf, so kann jede der beiden Auswerteeinheiten so ausgebildet sein, dass sie die Summe der Messspannung zwischen der ersten Elektrode und der zweiten Elektrode und der Messspannung zwischen der zweiten Elektrode und der dritten Elektrode bildet und den Summenwert mit dem Wert der Spannung zwischen der ersten und der dritten Elektrode vergleicht.

Die Auswerteeinrichtung kann insbesondere derart ausgestaltet sein, dass sie beim Abweichen der Werte voneinander einen Fehlerzustand signalisiert.

Das Signalisieren des Fehlerzustandes erfolgt je nach Ausgestaltung auf verschiedene Art und Weise. In einer Ausgestaltung weist die Auswerteeinrichtung eine Ausgabeeinheit zur Ausgabe der Messwerte auf. Die Auswerteeinrichtung ist dann in einer Ausgestaltung derart ausgestaltet, dass im Fall eines Fehlerzustandes die Kommunikation zwischen der ersten Auswerteeinheit und der Ausgabeeinheit unterbrochen wird und/oder die Kommunikation zwischen der zweiten Auswerteeinheit und der Ausgabeeinheit unterbrochen wird. Das hat zur Folge, dass keine Messwerte ausgegeben werden, insbesondere also auch keine fehlerhaften Messwerte ausgegeben werden. Die Auswerteeinrichtung kann insbesondere so ausgestaltet sein, dass die erste Auswerteeinheit allein mit der Ausgabeeinheit kommuniziert. Die zweite Auswerteeinheit ist dann derart ausgebildet, dass sie im Fall eines Fehlerzustandes die Kommunikation der ersten Auswerteeinheit mit der Ausgabeeinheit unterbricht. In einer weiteren Ausgestaltung wird im Fall eines Fehlerzustandes eine Fehlermeldung an die Ausgabeeinheit übermittelt. Insbesondere gibt die Ausgabeeinheit die Fehlermeldung aus. Die Übermittlung der Fehlermeldung an die Ausgabeeinheit erfolgt von der ersten Auswerteeinheit oder von der zweiten Auswerteeinheit.

Neben dem magnetisch-induktiven Durchflussmessgerät betrifft die Erfindung ebenfalls ein Verfahren zum Betreiben eines solchen magnetisch-induktiven Durchflussmessgerätes.

Das erfindungsgemäße Verfahren umfasst dabei die folgenden Schritte, die von der Auswerteeinrichtung durchgeführt werden: In einem Abgreifschritt wird eine erste Messspannung zwischen dem ersten Elektrodenpaar abgegriffen, eine zweite Messspannung zwischen dem zweiten Elektrodenpaar abgegriffen und eine dritte Messspannung zwischen der ersten Elektrode und der dritten Elektrode abgegriffen. In einem Additionsschritt werden die erste Messspannung und die zweite Messspannung addiert und in einem Vergleichsschritt wird der Wert der addierten Messspannungen mit dem Wert der zwischen der ersten Elektrode und der dritten Elektrode abgegriffenen Spannung verglichen.

Da insgesamt die Maschenregel für die abgegriffenen Spannungen gelten muss, kann mit dem erfindungsgemäßen Verfahren auf einfache Weise überprüft werden, ob das magnetisch-induktive Durchflussmessgerät fehlerfrei funktionsfähig ist. Weichen die miteinander verglichenen Werte voneinander ab, so liegt ein Fehlerzustand vor. In einer bevorzugten Ausführungsform des erfindungsgemäßen Verfahrens ist daher vorgesehen, dass im Fall eines Abweichens der miteinander verglichenen Werte in einem Fehlersignalisationsschritt ein Fehlerzustand signalisiert wird.

Wenn es heißt, dass die Schritte von der Auswerteeinrichtung durchgeführt werden und die Auswerteeinrichtung eine erste Auswerteeinheit und eine zweite Auswerteeinheit umfasst, dann können die Schritte jeweils von einer der beiden Auswerteeinheiten oder aber von beiden Auswerteeinheiten durchgeführt werden. Führen die erste Auswerteeinheit und die zweite Auswerteeinheit die jeweiligen Schritte durch, dann kann in einer bevorzugten Ausführungsform des erfindungsgemäßen Verfahrens vorgesehen sein, dass in einem weiteren Schritt die zweite Auswerteeinheit ihre Ergebnisse, insbesondere das Ergebnis des Vergleichs der Summenspannung und der Messspannung zwischen erster und dritter Elektrode, mit den Ergebnissen der ersten Auswerteeinheit abgleicht. So wird eine doppelte Überprüfung der Funktionstüchtigkeit des magnetisch-induktiven Durchflussmessgerätes erzielt.

Eine weitere bevorzugte Ausführungsform des erfindungsgemäßen Verfahrens ist dadurch gekennzeichnet, dass in einem Durchflussbestimmungsschritt in der ersten Auswerteeinheit der Durchfluss des Mediums im ersten Messrohr mit der ersten Messspannung bestimmt wird, in der ersten Auswerteeinheit der Durchfluss des Mediums im zweiten Messrohr mit der zweiten Messspannung bestimmt wird, der Differenzfluss zwischen den beiden Messrohren bestimmt wird, in der zweiten Auswerteeinheit der Durchfluss des Mediums im ersten Messrohr mit der ersten Messspannung bestimmt wird, in der zweiten Auswerteeinheit der Durchfluss des Mediums im zweiten Messrohr aus der zweiten Messspannung bestimmt und der Differenzfluss zwischen den beiden Messrohren bestimmt wird. In einem Abgleichschritt gleicht die zweite Auswerteeinheit ihre Werte mit denen der ersten Auswerteeinheit ab. Bei einem Abweichen der beiden Werte voneinander wird in einer Ausgestaltung ein Fehlerzustand signalisiert.

In einer Weiterbildung des erfindungsgemäßen Verfahrens wird im Fall eines auftretenden Fehlerzustandes in einem Unterbrechungsschritt die Kommunikation zwischen der ersten Auswerteeinheit und der Ausgabeeinheit und/oder die Kommunikation zwischen der zweiten Auswerteeinheit und der Ausgabeeinheit unterbrochen.

In einer Weiterbildung des erfindungsgemäßen Verfahrens wird in einem Fehlerausgabeschritt eine Fehlermeldung ausgegeben.

Sämtliche im Zusammenhang mit dem magnetisch-induktiven Durchflussmessgerät gemachten Ausführungen über besondere Ausgestaltungen und deren Vorzüge gelten entsprechend für das erfindungsgemäße Verfahren zum Betreiben eines solchen magnetisch-induktiven Durchflussmessgerätes übertragen und umgekehrt.

Im Einzelnen gibt es nun eine Vielzahl von Möglichkeiten, das erfindungsgemäße magnetisch-induktive Durchflussmessgerät und das erfindungsgemäße Verfahren auszugestalten und weiterzubilden bzw. auszuführen.

In der Zeichnung zeigen:
- Fig. 1a: schematisch eine erste Messrohranordnung,
- Fig. 1b: schematisch eine zweite Messrohranordnung,
- Fig. 2: schematisch eine Messrohranordnung mit Magnetfelderzeugungseinrichtung,
- Fig. 3: schematisch ein magnetisch-induktives Durchflussmessgerät mit Auswerteeinrichtung,
- Fig. 4: ein Blockdiagramm zur Darstellung einer ersten Ausführungsform eines Verfahrens zum Betreiben eines magnetisch-induktiven Durchflussmessgerätes und
- Fig. 5: ein Blockdiagramm zur Darstellung einer zweiten Ausführungsform eines Verfahrens zum Betreiben eines magnetisch-induktiven Durchflussmessgerätes.

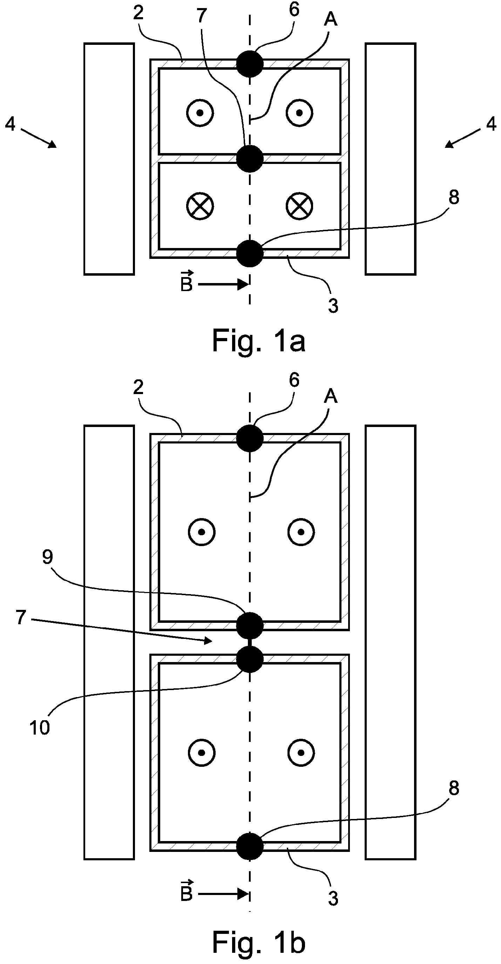

Fig. 1a zeigt einen Teil des magnetisch-induktiven Durchflussmessgerätes 1, nämlich ein erstes Messrohr 2 und ein zweites Messrohr 3, die parallel zueinander verlaufen. Im dargestellten Beispiel weisen beide Messrohre 2, 3 einen rechteckigen Querschnitt auf und sind in ihrer Geometrie identisch ausgebildet. Des Weiteren sind das erste Messrohr 2 und das zweite Messrohr 3 einstückig ausgebildet. Ebenfalls dargestellt ist ein Teil einer zum magnetisch-induktiven Durchflussmessgerät 1 gehörenden Magnetfelderzeugungseinrichtung 4, die zum Erzeugen eines die Messrohre 2, 3 senkrecht zur Strömungsrichtung des Mediums durchsetzenden Magnetfeldes B dient. Die Strömungsrichtung des Mediums im ersten Messrohr 2 ist entgegengesetzt der Strömungsrichtung des Mediums im zweiten Messrohr 3. Durch das Magnetfeld wird in dem leitenden Medium eine Messspannung induziert.

Ein erstes Elektrodenpaar, bestehend aus einer ersten Elektrode 6 und einer zweiten Elektrode 7 dient zum Abgreifen einer ersten Messspannung, die in dem Medium im ersten Messrohr 2 induziert wird. Ein zweites Elektrodenpaar, bestehend aus der zweiten Elektrode 7 und einer dritten Elektrode 8 dient zum Abgreifen einer zweiten Messspannung, die in dem Medium im zweiten Messrohr 3 induziert wird. Die zweite Elektrode 7 ist also sowohl Teil des ersten Elektrodenpaares als auch Teil des zweiten Elektrodenpaares und ist zwischen dem ersten Messrohr 2 und dem zweiten Messrohr 3 angeordnet. Die drei Elektroden 6, 7, 8 sind entlang einer Achse A angeordnet, die senkrecht zur Strömungsrichtung und senkrecht zu dem von der Magnetfelderzeugungsrichtung 4 erzeugten Magnetfeld B steht.

Dargestellt ist, dass alle drei Elektroden 6, 7, 8 auf der Achse A liegen. Das ist jedoch nicht zwingend. Vielmehr kann auch nur eine der Elektroden 6, 7, 8 oder zwei der Elektroden 6, 7, 8 auf der Achse A liegen, die anderen beiden bzw. die andere Elektrode liegt dann beabstandet zu der Achse A, jedoch in einer Richtung der Achse A. Die Magnetfeldrichtung B ist durch den eingezeichneten Pfeil angedeutet.

Die Fig. 1a zeigt eine Momentaufnahme. In der Regel werden magnetisch-induktive Durchflussmessgeräte 1 mit einem magnetischen Wechselfeld betrieben, demnach ändert sich die Magnetfeldrichtung B fortwährend um 180°. Durch die dargestellte Anordnung ergibt sich, dass die Messspannung zwischen der ersten Elektrode 6 und der dritten Elektrode 8 der Summe der ersten Messspannung und der zweiten Messspannung entspricht. Bei einer Abweichung liegt ein Fehlerzustand vor, der direkt signalisiert werden kann. So ist eine zuverlässige Arbeitsweise des magnetisch-induktiven Durchflussmessgerätes 1 gegeben.

Fig. 1b zeigt eine weitere Ausgestaltung. Im Unterschied zu Fig. 1a sind das erste Messrohr 2 und das zweite Messrohr 3 nicht einstückig ausgebildet und weisen in Strömungsrichtung einen quadratischen Querschnitt auf. Die zweite Elektrode 7 besteht aus einer ersten Teilelektrode 9 und aus einer zweiten Teilelektrode 10, die elektrisch leitend miteinander verbunden sind. Das erste Elektrodenpaar zum Abgreifen der ersten Messspannung im ersten Messrohr 2 wird also durch die erste Elektrode 6 und die erste Teilelektrode 9 der zweiten Elektrode 7 gebildet, wohingegen das zweite Elektrodenpaar zum Abgreifen der zweiten Messspannung im zweiten Messrohr 3 durch die zweite Teilelektrode 10 der zweiten Elektrode 7 und der dritten Elektrode 8 gebildet wird. Durch diese alternative Ausgestaltung gilt für die gemessenen Spannungen entsprechend, dass die Messspannung zwischen erster Elektrode 6 und dritter Elektrode 8 der Summe aus erster Messspannung und zweiter Messspannung entsprechen muss. Gegenüber der Ausgestaltung in Fig. 1a hat die Geometrie der Messrohre 2, 3 - quadratischer Querschnitt in Strömungsrichtung - im Ausführungsbeispiel gemäß Fig. 1b den Vorteil, dass das Verhältnis von Elektrodenabstand zur Messrohrerstreckung in Magnetfeldrichtung größer ist. Durch diese Maßnahme werden - bei gleichem Durchfluss - automatisch höhere Messspannungen erzeilt. Bei vorteilhaften Ausgestaltungen wird die Messrohrgeometrie so gewählt, dass das Verhältnis von Elektrodenabstand zur Messrohrerstreckung in Magnetfeldrichtung größer gleich Eins ist. Fig. 1b zeigt im Gegensatz zu Fig. 1a ebenfalls, dass die Strömungsrichtung des Mediums im ersten Messrohr 2 der Strömungsrichtung des Mediums im zweiten Messrohr 3 entspricht.

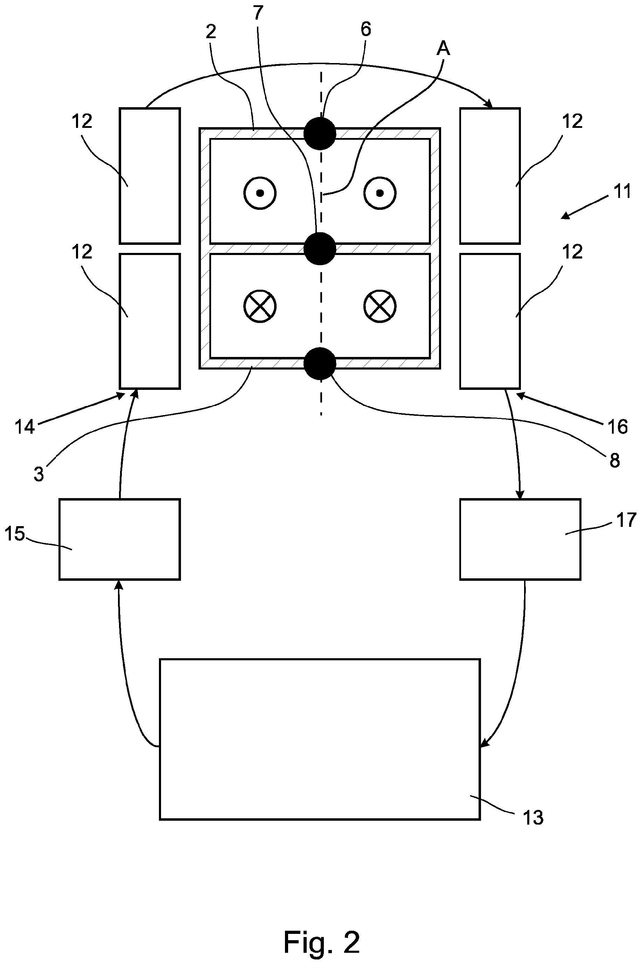

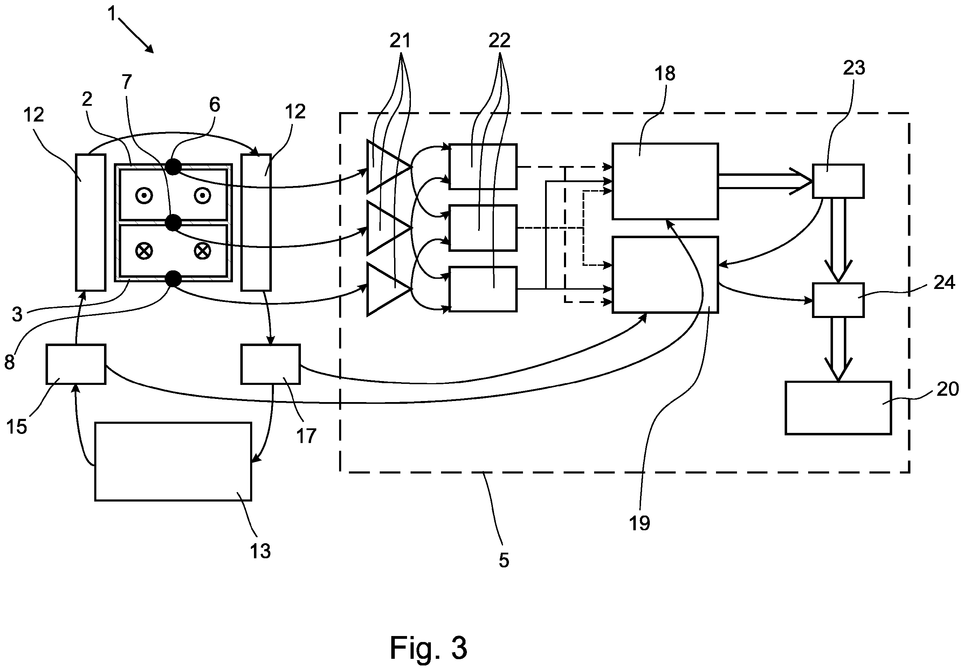

Fig. 2 zeigt neben den Messrohren 2, 3 und den Elektroden 6, 7, 8 die Magnetfelderzeugungseinrichtung 4. Die Magnetfelderzeugungseinrichtung 4 weist, wie auch in den Fig. 1a und 1b dargestellt, eine Spulenanordnung 11 auf, die aus mehreren, in Reihe geschalteten Spulen 12 besteht. Die Spulen 12 sind in Reihe geschaltet, um zu gewährleisten, dass alle Spulen 12 mit dem gleichen Spulenstrom beaufschlagt werden. Zum Beaufschlagen der Spulenanordnung 11 mit dem Spulenstrom dient die Ansteuereinheit 13. Zwischen der Ansteuereinheit 13 und einem ersten Anschluss 14 der Spulenanordnung ist eine erste Spulenstrommessvorrichtung 15 zur Erfassung eines ersten Spulenstroms angeordnet, wohingegen zwischen einem zweiten Anschluss 16 der Spulenanordnung 11 und der Ansteuereinheit 13 eine zweite Spulenstrommessvorrichtung 17 zur Erfassung eines zweiten Spulenstroms angeordnet ist. In einer (in Fig. 2 nicht, aber in Fig. 3 dargestellten) Auswerteeinrichtung 5 werden der erste und der zweite Spulenstrom miteinander verglichen. Im fehlerfreien Zustand sind die beiden Werte gleich. Weicht der Wert des ersten Spulenstroms von dem Wert des zweiten Spulenstroms ab, so liegt ein Fehler in der Spulenanordnung 11 vor, der direkt erkannt werden kann.

Fig. 3 zeigt ein vollständiges magnetisch-induktives Durchflussmessgerät 1. Neben der bereits beschriebenen Messrohranordnung und der Magnetfelderzeugungseinrichtung 4 weist das magnetisch-induktive Durchflussmessgerät 1 die Auswerteeinrichtung 5 auf. Die Auswerteeinrichtung 5 umfasst im Wesentlichen eine erste Auswerteeinheit 18, eine zweite Auswerteeinheit 19 und eine Anzeigeeinheit 20.

Die Elektroden 6, 7, 8 sind jeweils mit hochohmigen Spannungsmessern 21 verbunden, die hier als mit Operationsverstärkern realisierte Impedanzwandler ausgestaltet sind. Durch den hohen Eingangswiderstand des Spannungsmessers 21 kann gewährleistet werden, dass das System nicht (nennenswert) durch die Messung beeinflusst wird. Der hochohmige Spannungsmesser 21 eignet sich demnach besonders für die Messung kleiner elektrischer Spannungen, wie vorliegend gegeben. Die Spannung ergibt sich aus der Potenzialdifferenz zwischen dem Potenzial einer Elektrode und dem Grundpotenzial. Den hochohmigen Spannungsmessern 21 sind Analog-Digital-Wandler 22 nachgeschaltet, die die Differenz je zweier von den Spannungsmessern 21 gelieferten Spannungen, also analoge Differenzspannungen zwischen zwei Elektroden in digitale Signale wandeln. Die digitalen Signale werden dann an die erste Auswerteeinheit 18 und an die zweite Auswerteeinheit 19 übermittelt. Die erste Auswerteeinheit 18 und die zweite Auswerteeinheit 19 berechnen unabhängig voneinander Werte für den Durchfluss des Mediums im ersten Messrohr 2, den Durchfluss des Mediums im zweiten Messrohr 3 und/oder den Differenzfluss. Ebenfalls überprüfen die Auswerteeinheiten 18, 19 unabhängig voneinander, ob die Summe der ersten Messspannung und der zweiten Messspannung der Spannung zwischen der ersten Elektrode 6 und der dritten Elektrode 8 entspricht. Die zweite Auswerteeinheit 19 liest über eine Rückleseeinheit 23 die Daten der ersten Auswerteeinheit 18 ein und vergleicht diese mit ihren eigenen Daten. Stimmen die Daten überein, so liegt kein Fehler im System vor. Im dargestellten Beispiel wird dann von der zweiten Auswerteeinheit 19 ein Unterbrecher 24 in einen ersten Schaltzustand so gestellt, dass eine Kommunikation zwischen der ersten Auswerteeinheit 18 und der Anzeigeeinheit 20 stattfinden kann. Die erste Auswerteeinheit 18 übermittelt ihre Daten der Anzeigeeinheit 20, wo diese für einen Benutzer sichtbar ausgegeben werden. Liegt ein Fehlerzustand vor, weichen also die von der ersten Auswerteeinheit 18 ermittelten Daten von den von der zweiten Auswerteeinheit 19 ermittelten Daten ab, dann wird der Unterbrecher 24 von der zweiten Auswerteeinheit 19 in einen zweiten Schaltzustand gestellt, der bewirkt, dass die Kommunikation zwischen der ersten Auswerteeinheit 18 und der Anzeigeeinheit 20 unterbrochen ist. So können die Daten nicht ausgegeben werden. Eine nicht dargestellte Ausgestaltung sieht vor, dass die zweite Auswerteeinheit 19 im Falle eines Abweichens der Werte voneinander eine Fehlermeldung an die Anzeigeeinheit 20 übermittelt, die diese für den Benutzer sichtbar ausgibt.

In den Fig. 1 bis 3 sind die Elektroden 6, 7, 8 nur schematisch und überdeutlich dargestellt. Bei Ausführungsbeispielen in der Praxis ragen die Elektroden vorzugsweise nicht in den Strömungsquerschnitt der Messrohre hinein. Wenn die Messrohranordnungen durch einen Extrusionsvorgang hergestellt werden, können die Elektroden bereits beim extrudieren von der Extrusionsmasse fest umgeben werden. Gleiches gilt auch für elektrische Zuleitungen zu den Elektroden.

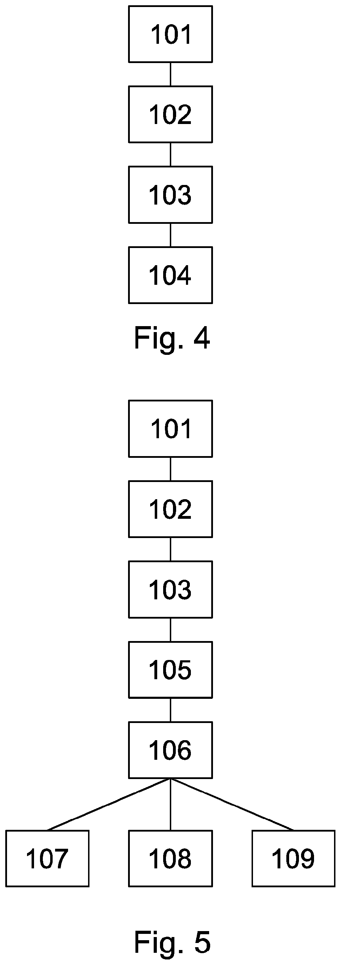

Fig. 4 zeigt ein Blockdiagramm einer ersten Ausführungsform eines Verfahrens zum Betreiben eines magnetisch-induktiven Durchflussmessgerätes. Die in dem Verfahren beschriebenen Verfahrensschritte werden von der Auswerteeinrichtung durchgeführt. In einem Abgreifschritt 101 wird eine erste Messspannung zwischen dem ersten Elektrodenpaar abgegriffen, eine zweite Messspannung zwischen dem zweiten Elektrodenpaar abgegriffen und eine Messspannung zwischen der ersten Elektrode und der dritten Elektrode abgegriffen. In einem Additionsschritt 102 werden die erste Messspannung und die zweite Messspannung addiert, bevor in einem Vergleichsschritt 103 der Wert der addierten Messspannungen mit dem Wert der zwischen der ersten Elektrode und der dritten Elektrode abgegriffenen Messspannung verglichen wird. Da die zweite Elektrode sowohl Teil des ersten Elektrodenpaares als auch des zweiten Elektrodenpaares ist, muss die Summe der ersten Messspannung und der zweiten Messspannung dem Wert der Messspannung zwischen erster und dritter Elektrode entsprechen. Ist dies nicht der Fall, liegt ein Fehlerzustand vor. In einem Fehlersignalisationsschritt wird dann ein Fehlerzustand signalisiert.

Fig. 5 zeigt ein Blockdiagramm einer zweiten Ausführungsform eines Verfahrens zum Betreiben eines magnetisch-induktiven Durchflussmessgerätes. Die ersten Verfahrensschritte 101, 102 und 103 entsprechen den in Fig. 4 dargestellten Verfahrensschritten. Liegt kein Fehlerzustand vor, entspricht die Summe der ersten und zweiten Messspannung also dem Wert der Messspannung zwischen erster Elektrode und dritter Elektrode, folgt ein Durchflussbestimmungsschritt 105. Der Durchflussbestimmungsschritt 105 umfasst, dass in der ersten Auswerteeinheit der Durchfluss des Mediums im ersten Messrohr mit der ersten Messspannung bestimmt wird, in der ersten Auswerteeinheit der Durchfluss des Mediums im zweiten Messrohr mit der zweiten Messspannung bestimmt wird, der Differenzfluss zwischen den beiden Messrohren bestimmt wird, in der zweiten Auswerteeinheit der Durchfluss des Mediums im ersten Messrohr mit der ersten Messspannung bestimmt wird, in der zweiten Auswerteeinheit der Durchfluss des Mediums im zweiten Messrohr aus der zweiten Messspannung bestimmt und der Differenzfluss zwischen den beiden Messrohren bestimmt wird. Die beiden Auswerteeinheiten bestimmen also jeweils die Werte für die einzelnen Durchflüsse in dem ersten und zweiten Messrohr sowie jeweils einen Wert für den Differenzfluss. In einem Abgleichschritt 106 liest die zweite Auswerteeinheit dann die von der ersten Auswerteeinheit bestimmten Werte ein und gleicht sie mit ihren Werten ab. Im Fall eines Abweichens der Werte der ersten Auswerteeinheit von den Werten der zweiten Auswerteeinheit wird in einem Unterbrechungsschritt 107 die Kommunikation zwischen der ersten Auswerteeinheit und der Ausgabeeinheit und/oder die Kommunikation zwischen der zweiten Auswerteeinheit und der Ausgabeeinheit unterbrochen, sodass keine Messwerte, also insbesondere keine fehlerhaften Messwerte ausgegeben werden können. Alternativ dargestellt ist, dass im Fall eines Abweichens der Werte voneinander in einem Fehlerausgabeschritt 108 eine Fehlermeldung von der Ausgabeeinheit ausgegeben wird.

Weichen die Werte nicht voneinander ab, so werden in einem Messwertausgabeschritt 109 der Wert für den Durchfluss im ersten Messrohr und/oder der Wert für den Durchfluss im zweiten Messrohr und/oder der Wert für den Differenzfluss von der Ausgabeeinheit für einen Benutzer ausgegeben.

### Bezugszeichen

- 1: magnetisch-induktives Durchflussmessgerät
- 2: erstes Messrohr
- 3: zweites Messrohr
- 4: Magnetfelderzeugungseinrichtung
- 5: Auswerteeinrichtung
- 6: erste Elektrode
- 7: zweite Elektrode
- 8: dritte Elektrode
- 9: erste Teilelektrode der zweiten Elektrode
- 10: zweite Teilelektrode der zweiten Elektrode
- 11: Spulenanordnung
- 12: Spulen
- 13: Ansteuereinheit
- 14: erster Anschluss der Spulenanordnung
- 15: erste Spulenstrommessvorrichtung
- 16: zweiter Anschluss der Spulenanordnung
- 17: zweite Spulenstrommessvorrichtung
- 18: erste Auswerteeinheit
- 19: zweite Auswerteeinheit
- 20: Ausgabeeinheit
- 21: hochohmige Spannungsmesser
- 22: Analog-Digital-Wandler
- 23: Rückleseeinheit
- 24: Unterbrecher

- 101: Abgreifschritt
- 102: Additionsschritt
- 103: Vergleichsschritt
- 104: Fehlersignalisationsschritt
- 105: Durchflussbestimmungsschritt
- 106: Abgleichschritt
- 107: Unterbrechungsschritt
- 108: Fehlerausgabeschritt
- 109: Messwertausgabeschritt

## Patentansprüche

1. Magnetisch-induktives Durchflussmessgerät (1) zur Bestimmung des Durchflusses wenigstens eines Mediums, mit einem ersten Messrohr (2) und mit einem zweiten Messrohr (3) zum Führen des wenigstens einen Mediums, wobei die Messrohre (2, 3) parallel zueinander verlaufen, mit einer Magnetfelderzeugungseinrichtung (4) zum Erzeugen eines die Messrohre (2, 3) senkrecht zur Strömungsrichtung des wenigstens einen Mediums durchsetzenden Magnetfeldes, mit einem ersten Elektrodenpaar zum Abgreifen einer in dem Medium im ersten Messrohr (2) induzierten ersten Messspannung, mit einem zweiten Elektrodenpaar zum Abgreifen einer in dem Medium im zweiten Messrohr (3) induzierten zweiten Messspannung und mit einer Auswerteeinrichtung (5) zur Auswertung der Messspannungen, wobei das erste Elektrodenpaar und das zweite Elektrodenpaar zusammen durch eine erste Elektrode (6), eine zweite Elektrode (7) und eine dritte Elektrode (8) gebildet sind, wobei die zweite Elektrode (7) sowohl Teil des ersten Elektrodenpaares als auch Teil des zweiten Elektrodenpaares ist und wobei die zweite Elektrode (7) zwischen den beiden Messrohren (2, 3) angeordnet ist, wobei die drei Elektroden (6, 7, 8) entlang einer Achse (A) senkrecht zur Strömungsrichtung des Mediums und senkrecht zur Magnetfeldrichtung (B) angeordnet sind,
**dadurch gekennzeichnet,**
**dass** die Magnetfelderzeugungseinrichtung (4) eine Spulenanordnung (11) und eine Ansteuereinheit (13) zum Beaufschlagen der Spulenanordnung (11) mit einem Spulenstrom aufweist, dass die Spulenanordnung (11) durch eine einzelne Spule realisiert ist, oder dass die Spulenanordnung (11) durch mehrere in Reihe geschaltete Spulen (12) realisiert ist, wobei die mehreren Spulen (12) in Reihe geschaltet sind, um zu gewährleisten, dass alle Spulen (12) mit dem gleichen Spulenstrom beaufschlagt sind, dass zwischen der Ansteuereinheit (13) und einem ersten Anschluss (14) der Spulenanordnung (11) eine erste Spulenstrommessvorrichtung (15) zur Erfassung eines ersten Spulenstroms angeordnet ist und zwischen einem zweiten Anschluss (16) der Spulenanordnung (11) und der Ansteuereinheit (13) eine zweite Spulenstrommessvorrichtung (17) zur Erfassung eines zweiten Spulenstroms angeordnet ist und dass die Auswerteeinrichtung (5) derart ausgestaltet ist, dass sie den ersten Spulenstrom und den zweiten Spulenstrom miteinander vergleicht.

2. Magnetisch-induktives Durchflussmessgerät (1) nach Anspruch 1, **dadurch gekennzeichnet, dass** die Auswerteeinrichtung (5) eine erste Auswerteeinheit (18) und eine zweite Auswerteeinheit (19) aufweist und derart ausgestaltet ist, dass die erste Auswerteeinheit (18) und die zweite Auswerteeinheit (19) jeweils unabhängig voneinander Messwerte für den Durchfluss des Mediums im ersten Messrohr (2) und den Durchfluss des Mediums im zweiten Messrohr (3) bestimmen und/oder einen Wert für den Differenzfluss im ersten Messrohr (2) und im zweiten Messrohr (3) bestimmen und die zweite Auswerteeinheit (19) die Messwerte der ersten Auswerteeinheit (18) mit ihren Messwerten abgleicht, insbesondere im Fall eines Abweichens der Messwerte voneinander einen Fehlerzustand signalisiert.

3. Magnetisch-induktives Durchflussmessgerät (1) nach Anspruch 1 oder 2, **dadurch gekennzeichnet, dass** die zweite Elektrode (7) aus einer ersten Teilelektrode (9) und einer zweiten Teilelektrode (10) gebildet ist, wobei die beiden Teilelektroden (9, 10) elektrisch leitend miteinander verbunden sind, und wobei das erste Elektrodenpaar durch die erste Elektrode (6) und die erste Teilelektrode (9) gebildet wird und wobei das zweite Elektrodenpaar durch die zweite Teilelektrode (10) und die dritte Elektrode (8) gebildet wird.

4. Magnetisch-induktives Durchflussmessgerät (1) nach einem der Ansprüche 1 bis 3, **dadurch gekennzeichnet, dass** das erste Messrohr (2) und das zweite Messrohr (3) stoffschlüssig miteinander verbunden sind oder dass das erste Messrohr (2) und das zweite Messrohr (3) einstückig ausgebildet sind, insbesondere durch Extrusion gefertigt sind.

5. Magnetisch-induktives Durchflussmessgerät (1) nach einem der Ansprüche 1 bis 4, **dadurch gekennzeichnet, dass** die Auswerteeinrichtung (5) derart ausgestaltet ist, dass sie die Summe der Messspannung zwischen der ersten Elektrode (6) und der zweiten Elektrode (7) und der Messspannung zwischen der zweiten Elektrode (7) und der dritten Elektrode (8) bildet und den Summenwert mit der Messspannung zwischen der ersten Elektrode (6) und der dritten Elektrode (8) vergleicht, insbesondere beim Abweichen der Werte voneinander einen Fehlerzustand signalisiert.

6. Magnetisch-induktives Durchflussmessgerät (1) nach einem der Ansprüche 2 bis 5, **dadurch gekennzeichnet, dass** die Auswerteeinrichtung (5) eine Ausgabeeinheit (20) zur Ausgabe der Messwerte aufweist und die Auswerteeinrichtung (5) derart ausgestaltet ist, dass im Fall eines Fehlerzustandes die Kommunikation zwischen der ersten Auswerteeinheit (18) und der Ausgabeeinheit (20) unterbrochen wird und/oder die Kommunikation zwischen der zweiten Auswerteeinheit (19) und der Ausgabeeinheit (20) unterbrochen wird, so dass keine Messwerte ausgegeben werden.

7. Magnetisch-induktives Durchflussmessgerät (1) nach einem der Ansprüche 2 bis 5, **dadurch gekennzeichnet, dass** die Auswerteeinrichtung (5) eine Ausgabeeinheit (20) zur Ausgabe der Messwerte aufweist und die Auswerteeinrichtung (5) derart ausgestaltet ist, dass im Fall eines Fehlerzustandes eine Fehlermeldung an die Ausgabeeinheit (20) übermittelt wird, insbesondere wobei die Ausgabeeinheit (20) die Fehlermeldung ausgibt.

8. Verfahren zum Betreiben eines magnetisch-induktiven Durchflussmessgerätes nach einem der Ansprüche 1 bis 7,
**dadurch gekennzeichnet,**
**dass** von der Auswerteeinrichtung in einem Abgreifschritt (101) eine erste Messspannung zwischen dem ersten Elektrodenpaar abgegriffen wird, eine zweite Messspannung zwischen dem zweiten Elektrodenpaar abgegriffen wird und eine dritte Messspannung zwischen der ersten Elektrode und der dritten Elektrode abgegriffen wird,
**dass** in einem Additionsschritt (102) die erste Messspannung und die zweite Messspannung addiert werden,
**dass** in einem Vergleichsschritt (103) der Wert der addierten Messspannungen mit dem Wert der zwischen der ersten Elektrode und der dritten Elektrode abgegriffenen Spannung verglichen wird.

9. Verfahren nach Anspruch 8, **dadurch gekennzeichnet, dass** bei einem Abweichen der miteinander verglichenen Werte in einem Fehlersignalisationsschritt (104) ein Fehlerzustand signalisiert wird.

10. Verfahren nach Anspruch 8 oder 9, **dadurch gekennzeichnet, dass** in einem Durchflussbestimmungsschritt (105) in der ersten Auswerteeinheit der Durchfluss des Mediums im ersten Messrohr mit der ersten Messspannung bestimmt wird, in der ersten Auswerteeinheit der Durchfluss des Mediums im zweiten Messrohr mit der zweiten Messspannung bestimmt wird, der Differenzfluss zwischen den beiden Messrohren bestimmt wird, in der zweiten Auswerteeinheit der Durchfluss des Mediums im ersten Messrohr mit der ersten Messspannung bestimmt wird, in der zweiten Auswerteeinheit der Durchfluss des Mediums im zweiten Messrohr aus der zweiten Messspannung bestimmt und der Differenzfluss zwischen den beiden Messrohren bestimmt wird und dass in einem Abgleichschritt (106) die zweite Auswerteeinheit ihre Werte mit denen der ersten Auswerteeinheit abgleicht und insbesondere bei einem Abweichen der beiden Werte voneinander ein Fehlerzustand signalisiert.

11. Verfahren nach Anspruch 10, **dadurch gekennzeichnet, dass** im Fall eines Fehlerzustandes in einem Unterbrechungsschritt (107) die Kommunikation zwischen der ersten Auswerteeinheit und der Ausgabeeinheit und/oder die Kommunikation zwischen der zweiten Auswerteeinheit und der Ausgabeeinheit unterbrochen wird oder dass in einem Fehlerausgabeschritt (108) eine Fehlermeldung ausgegeben wird.

## Claims

1. Magnetic-inductive flowmeter (1) for determining the flow of at least one medium, having a first measuring tube (2) and a second measuring tube (3) for guiding the at least one medium, wherein the measuring tubes (2, 3) run parallel to one another, having a magnetic field generating device (4) for generating a magnetic field permeating the measuring tubes (2, 3) perpendicular to the flow direction of the at least one medium, having a first electrode pair for tapping a first measuring voltage induced in the medium in the first measuring tube (2), having a second electrode pair for tapping a second measuring voltage induced in the medium in the second measuring tube (3), and having an evaluation unit (5) for evaluating the measuring voltages, wherein the first electrode pair and the second electrode pair are formed together by a first electrode (6), a second electrode (7) and a third electrode (8), wherein the second electrode (7) is both part of the first electrode pair and part of the second electrode pair, and wherein the second electrode (7) is arranged between the two measuring tubes (2, 3), wherein the three electrodes (6, 7, 8) are arranged along an axis (A) perpendicular to the flow direction of the medium and perpendicular to the magnetic field direction (B),
**characterized in**
**that** the magnetic field generating device (4) has a coil arrangement (11) and a control unit (13) for applying a coil current to the coil arrangement (11), that the coil arrangement (11) is implemented by a single coil, or that the coil arrangement (11) is implemented by a plurality of coils (12) connected in series, wherein the plurality of coils (12) are connected in series to ensure that all coils (12) are impinged with the same coil current, that a first coil current measuring device (15) for detecting a first coil current is arranged between the control unit (13) and a first terminal (14) of the coil arrangement (11), and a second coil current measuring device (17) for detecting a second coil current is arranged between a second terminal (16) of the coil arrangement (11) and the control unit (13), and that the evaluation unit (5) is designed in such a manner that it compares the first coil current and the second coil current with one another.

2. Magnetic-inductive flowmeter (1) according to claim 1, **characterized in that** the evaluation unit (5) has a first evaluation unit (18) and a second evaluation unit (19) and is designed in such a manner that the first evaluation unit (18) and the second evaluation unit (19) each determine, independently of one another, measured values for the flow of the medium in the first measuring tube (2) and the flow of the medium in the second measuring tube (3) and/or determine a value for the flow difference in the first measuring tube (2) and in the second measuring tube (3), and the second evaluation unit (19) compares the measured values of the first evaluation unit (18) with its measured values, in particular signals an error state in the event of the measured values deviating from one another.

3. Magnetic-inductive flowmeter (1) according to claim 1 or 2, **characterized in that** the second electrode (7) is formed from a first partial electrode (9) and a second partial electrode (10), wherein the two partial electrodes (9, 10) are electrically conductively connected to one another, and wherein the first electrode pair is formed by the first electrode (6) and the first partial electrode (9), and wherein the second electrode pair is formed by the second partial electrode (10) and the third electrode (8).

4. Magnetic-inductive flowmeter (1) according to any one of claims 1 to 3, **characterized in that** the first measuring tube (2) and the second measuring tube (3) are materially connected to one another or that the first measuring tube (2) and the second measuring tube (3) are formed in one piece, in particular are manufactured by extrusion.

5. Magnetic-inductive flowmeter (1) according to any one of claims 1 to 4, **characterized in that** the evaluation unit (5) is designed in such a manner that it forms the sum of the measuring voltage between the first electrode (6) and the second electrode (7) and the measuring voltage between the second electrode (7) and the third electrode (8) and compares the sum value with the measuring voltage between the first electrode (6) and the third electrode (8), in particular signals an error state when the values deviate from one another.

6. Magnetic-inductive flowmeter (1) according to any one of claims 2 to 5, **characterized in that** the evaluation unit (5) has an output unit (20) for outputting the measured values and the evaluation unit (5) is designed such that, in the event of an error state, communication between the first evaluation unit (18) and the output unit (20) is interrupted and/or communication between the second evaluation unit (19) and the output unit (20) is interrupted so that no measured values are output.

7. Magnetic-inductive flowmeter (1) according to any one of claims 2 to 5, **characterized in that** the evaluation unit (5) has an output unit (20) for outputting the measured values and the evaluation unit (5) is designed in such a manner that, in the event of an error state, an error message is transmitted to the output unit (20), in particular wherein the output unit (20) outputs the error message.

8. Method for operating a magnetic-inductive flowmeter according to any one of claims 1 to 7,
**characterized in**
**that**, in a tapping step (101), the evaluation unit taps a first measuring voltage between the first electrode pair, a second measuring voltage between the second electrode pair and a third measuring voltage between the first electrode and the third electrode,
**that** the first measuring voltage and the second measuring voltage are added in an addition step (102),
**that**, in a comparison step (103), the value of the added measuring voltages is compared with the value of the voltage tapped between the first electrode and the third electrode.

9. Method according to claim 8, **characterized in that** an error state is signalled in an error signalling step (104) when the values compared with one another deviate.

10. Method according to claim 8 or 9, **characterized in that**, in a flow determination step (105), the flow of the medium in the first measuring tube is determined in the first evaluation unit using the first measuring voltage, the flow of the medium in the second measuring tube is determined in the first evaluation unit using the second measuring voltage, the flow difference between the two measuring tubes is determined, the flow of the medium in the first measuring tube is determined in the second evaluation unit using the first measuring voltage, the flow of the medium in the second measuring tube is determined in the second evaluation unit using the second measuring voltage and the flow difference between the two measuring tubes is determined, and that, in a comparison step (106), the second evaluation unit compares its values with those of the first evaluation unit and, in particular, signals an error state if the two values deviate from one another.

11. Method according to claim 10, **characterized in that**, in the event of an error state, communication between the first evaluation unit and the output unit and/or communication between the second evaluation unit and the output unit is interrupted in an interrupting step (107), or **in that** an error message is output in an error output step (108).

## Revendications

1. Débitmètre magnéto-inductif (1) destiné à déterminer le débit d'au moins un milieu, ledit débitmètre comprenant un premier tube de mesure (2) et un deuxième tube de mesure (3) destinés à guider l'au moins un milieu, les tubes de mesure (2, 3) s'étendant parallèlement l'un à l'autre, un module de génération de champ magnétique (4) destiné à générer un champ magnétique pénétrant dans les tubes de mesure (2, 3) perpendiculairement au sens d'écoulement de l'au moins un milieu, une première paire d'électrodes destinées à prélever une première tension de mesure induite dans le milieu se trouvant dans le premier tube de mesure (2), une deuxième paire d'électrodes destinées à prélever une deuxième tension de mesure induite dans le milieu se trouvant dans le deuxième tube de mesure (3) et un module d'évaluation (5) destiné à évaluer les tensions de mesure, la première paire d'électrodes et la deuxième paire d'électrodes étant formées conjointement par une première électrode (6), une deuxième électrode (7) et une troisième électrode (8), la deuxième électrode (7) faisant aussi bien partie de la première paire d'électrodes que partie de la deuxième paire d'électrodes et la deuxième électrode (7) étant disposée entre les deux tubes de mesure (2, 3), les trois électrodes (6, 7, 8) étant disposées le long d'un axe (A) perpendiculaire au sens d'écoulement du milieu et perpendiculaire à la direction du champ magnétique (B),
**caractérisé en ce que**
le module de génération de champ magnétique (4) comporte un ensemble de bobines (11) et une unité de commande (13) destinée à appliquer un courant de bobine à l'ensemble de bobines (11),
l'ensemble de bobines (11) est réalisé par une seule bobine, ou
l'ensemble de bobines (11) est réalisé par plusieurs bobines (12) montées en série, les plusieurs bobines (12) étant montées en série pour garantir que le même courant de bobine est appliqué à toutes les bobines (12),
un premier dispositif de mesure de courant de bobine (15) destiné à détecter un premier courant de bobine est disposé entre l'unité de commande (13) et une première borne (14) de l'ensemble de bobines (11) et un deuxième dispositif de mesure de courant de bobine (17) destiné à détecter un deuxième courant de bobine est disposé entre une deuxième borne (16) de l'ensemble de bobines (11) et l'unité de commande (13) et
le module d'évaluation (5) est conçu de manière à comparer le premier courant de bobine et le deuxième courant de bobine l'un à l'autre.

2. Débitmètre magnéto-inductif (1) selon la revendication 1, **caractérisé en ce que** le module d'évaluation (5) comporte une première unité d'évaluation (18) et une deuxième unité d'évaluation (19) et est conçu de manière à ce que la première unité d'évaluation (18) et la deuxième unité d'évaluation (19) déterminent, indépendamment l'une de l'autre, des valeurs de mesure pour le débit du milieu dans le premier tube de mesure (2) et le débit du milieu dans le deuxième tube de mesure (3) et/ou déterminent une valeur pour le débit différentiel dans le premier tube de mesure (2) et dans le deuxième tube de mesure (3) et la deuxième unité d'évaluation (19) compare les valeurs de mesure de la première unité d'évaluation (18) à ses valeurs de mesure, notamment signale un état d'erreur dans le cas où les valeurs de mesure diffèrent les unes des autres.

3. Débitmètre magnéto-inductif (1) selon la revendication 1 ou 2, **caractérisé en ce que** la deuxième électrode (7) est formée d'une première partie d'électrode (9) et d'une deuxième partie d'électrode (10), les deux parties d'électrode (9, 10) étant reliées électriquement l'une à l'autre, et la première paire d'électrodes étant formée par la première électrode (6) et la première partie d'électrode (9) et la deuxième paire d'électrodes étant formée par la deuxième partie d'électrode (10) et la troisième électrode (8).

4. Débitmètre magnéto-inductif (1) selon l'une des revendications 1 à 3, **caractérisé en ce que** le premier tube de mesure (2) et le deuxième tube de mesure (3) sont reliés l'un à l'autre par une liaison de matière ou **en ce que** le premier tube de mesure (2) et le deuxième tube de mesure (3) sont formés d'une seule pièce, notamment sont fabriqués par extrusion.

5. Débitmètre magnéto-inductif (1) selon l'une des revendications 1 à 4, **caractérisé en ce que** le module d'évaluation (5) est conçu pour mesurer la somme de la tension de mesure entre la première électrode (6) et la deuxième électrode (7) et la tension de mesure entre la deuxième électrode (7) et la troisième électrode (8) et comparer la valeur somme à la tension de mesure entre la première électrode (6) et la troisième électrode (8), notamment signaler un état d'erreur lorsque les valeurs diffèrent les unes des autres.

6. Débitmètre magnéto-inductif (1) selon l'une des revendications 2 à 5, **caractérisé en ce que** le module d'évaluation (5) comporte une unité de sortie (20) destinée à délivrer en sortie les valeurs de mesure et le module d'évaluation (5) est conçu de sorte que, dans le cas d'un état d'erreur, la communication entre la première unité d'évaluation (18) et l'unité de sortie (20) soit interrompue et/ou la communication entre la deuxième unité d'évaluation (19) et l'unité de sortie (20) soit interrompue de sorte qu'aucune valeur de mesure ne soit délivrée en sortie.

7. Débitmètre magnéto-inductif (1) selon l'une des revendications 2 à 5, **caractérisé en ce que** le module d'évaluation (5) comporte une unité de sortie (20) destinée à délivrer en sortie les valeurs de mesure et le module d'évaluation (5) est conçu de telle sorte que, dans le cas d'un état d'erreur, un message d'erreur soit transmis à l'unité de sortie (20), en particulier l'unité de sortie (20) délivrant en sortie le message d'erreur.

8. Procédé de fonctionnement d'un débitmètre magnéto-inductif selon l'une des revendications 1 à 7,
**caractérisé en ce que**
le module d'évaluation prélève dans une étape de prélèvement (101) une première tension de mesure entre la première paire d'électrodes, une deuxième tension de mesure entre la deuxième paire d'électrodes et une troisième tension de mesure entre la première électrode et la troisième électrode,
la première tension de mesure et la deuxième tension de mesure sont additionnées dans une étape d'addition (102),
la valeur des tensions de mesure additionnées est comparée, dans une étape de comparaison (103), à la valeur de la tension prélevée entre la première électrode et la troisième électrode.

9. Procédé selon la revendication 8, **caractérisé en ce que**, lorsque les valeurs comparées entre elles diffèrent les unes des autres, un état d'erreur est signalé dans une étape de signalisation d'erreur (104).

10. Procédé selon la revendication 8 ou 9, **caractérisé en ce que**
dans une étape de détermination de débit (105) le débit du milieu dans le premier tube de mesure est déterminé avec la première tension de mesure dans la première unité d'évaluation, le débit du milieu dans le deuxième tube de mesure est déterminé avec la deuxième tension de mesure dans la première unité d'évaluation, le débit différentiel entre les deux tubes de mesure est déterminé, le débit du milieu dans le premier tube de mesure est déterminé avec la première tension de mesure dans la deuxième unité d'évaluation, le débit du milieu dans le deuxième tube de mesure est déterminé avec la deuxième tension de mesure dans la deuxième unité d'évaluation, et le débit différentiel entre les deux tubes de mesure est déterminé et
dans une étape de comparaison (106) la deuxième unité d'évaluation compare ses valeurs à celles de la première unité d'évaluation et, notamment signale un état d'erreur lorsque les deux valeurs diffèrent l'une de l'autre.

11. Procédé selon la revendication 10, **caractérisé en ce que**, dans le cas d'un état d'erreur dans une étape d'interruption (107), la communication entre la première unité d'évaluation et l'unité de sortie et/ou la communication entre la deuxième unité d'évaluation et l'unité de sortie sont interrompues ou **en ce qu'**un message d'erreur est délivré en sortie dans une étape de sortie d'erreur (108).
